# EUROPÄISCHE PATENTSCHRIFT

(11) **EP 3 908 910 B1**
(45) Veröffentlichungstag und Bekanntmachung des Hinweises auf die Patenterteilung: **21.06.2023**
(21) Anmeldenummer: 20701515.7
(22) Anmeldetag: 10.01.2020
(51) Int. Cl.: G06F 3/01

(54) **VORRICHTUNG FÜR DAS SIMULIEREN EINER FORTBEWEGUNG EINES BENUTZERS**
APPARATUS FOR SIMULATING A MOVEMENT OF A USER
DISPOSITIF DE SIMULATION DU MOUVEMENT D'UN UTILISATEUR

(30) Priorität: 11.01.2019 AT 72019
(43) Veröffentlichungstag der Anmeldung: 17.11.2021
(73) Patentinhaber: Cyberith GmbH, 3100 St. Pölten (AT)
(72) Erfinder: JÄGERS, Janine Johara, 1160 Wien (AT); MOSER, Bernd, 3124 Wölbling (AT); CAKMAK, Gencay, 3130 Herzogenburg (AT); HAGER, Holger, 2130 Mistelbach (AT); CAKMAK, Tuncay, 3100 St. Pölten (AT)
(74) Vertreter: Keschmann, Marc
(86) Internationale Anmeldenummer: PCT/IB2020/050169
(87) Internationale Veröffentlichungsnummer: WO 2020/144631

(56) Entgegenhaltungen:
- WO-A2-00/77604
- US-A- 6 152 854

## Beschreibung

Die Erfindung betrifft eine Vorrichtung für die simulierte Fortbewegung eines Benutzers insbesondere in einer virtuellen Umgebung, umfassend eine vom Benutzer begehbare Plattform, wobei die Plattform neigbar angeordnet ist und mit einer räumlichen Bewegungs-Maschine zusammenwirkt, um die Neigungsrichtung und den Neigungswinkel der Plattform zu verändern.

Auf dem Gebiet der Virtual Reality- und Simulator-Technologie ist das sogenannte "Locomotion Problem" wohl bekannt. Dabei handelt es sich um das konzeptionelle Problem der Fortbewegung von Benutzern durch große virtuelle Welten, obwohl der zur Verfügung stehende reale Raum begrenzt ist. Neben der begrenzten Verfügbarkeit von sehr großen Räumen kommt die technische Schwierigkeit erschwerend hinzu, solche sehr großen Räume zur Gänze mit einem automatisierten Bewegungserfassungssystem auszustatten. In vielen Anwendungsgebieten ist es der Fall, dass die virtuellen Welten, durch die sich ein Benutzer bewegen können soll, bedeutend größer sind als der zur Verfügung stehende reale Raum.

Es sind daher verschiedene Vorrichtungen unter den Bezeichnungen "locomotion devices" oder "omnidirectional treadmills" bekannt geworden, mit denen die Fortbewegung eines Benutzers simuliert werden kann, während der Benutzer im Wesentlichen auf der Stelle tritt, nämlich auf einer hierfür vorgesehenen Plattform. Derartige Vorrichtungen zur simulieren Fortbewegung eines Benutzers finden vor allem in Verbindung mit einem auf dem Kopf getragenen visuellen Ausgabegerät ("head mounted display"), wie z.B. VR-Brillen oder dgl., oder anderen Displays, wie z.B. Monitoren oder Projektoren, Anwendung als Simulationsgerät, Sportgerät, Vergnügungsgerät oder Forschungsgerät. Diese Geräte erlauben es einem Benutzer sich in jede Richtung durch unbeschränkte virtuelle Umgebungen zu bewegen ohne sich dabei im realen Raum fortzubewegen. Durch zusätzlichen Einsatz von speziellen Controllern, Handschuhen oder Kameras ist es möglich die Bewegungen der Hände des Benutzers in die virtuelle Welt zu projizieren. Dadurch ist es möglich mit in der virtuellen Welt befindlichen Objekten zu interagieren.

Es sind verschiedene Maßnahmen vorgeschlagen worden, um den Benutzer während der simulierten Fortbewegung auf der begehbaren Plattform zu halten. Die EP 2911755 B1 offenbart ein "locomotion device" mit einer flachen Bodenplattform und einem den Benutzer umgebenden Ring, wobei der Benutzer durch einen Gurt mit dem Ring verbunden ist und der Ring sowohl einen rotatorischen Freiheitsgrad als auch einen vertikalen Freiheitsgrad aufweist. Die simuliere Fortbewegung erfolgt derart, das der durch den Ring gestützte Benutzer während der Gehbewegungen mit seinen Füßen auf der Plattform gleitet. Das beschriebene Gerät wirkt bewegungseinschränkend auf den Benutzer und verhindert die Fortbewegung des Benutzers, indem die Reibungskraft zwischen den Füßen und der Plattform durch Druck gegen die mechanische Konstruktion des Geräts ausgeglichen wird. Das Prinzip dieses Geräts erfordert es, dass der Benutzer Druck nach vorne ausübt, was für diesen eine Anstrengung bedeutet. Aufgrund der flachen, nicht neigbaren Bodenplattform erfordert dieses Gerät eine hohe Kraft, um die Reibungskraft zwischen den Füßen des Benutzers und der Bodenplattform zu überwinden.

Die US 9329681 B2 offenbart ein "locomotion device" mit einer konkaven Bodenplattform und einem den Benutzer umgebenden Ring, wobei der Benutzer durch einen Gurt indirekt mit dem Ring verbunden ist. Durch die indirekte Verbindung des Gurtes mit dem starren Ring kann sich der Benutzer in einem Bereich innerhalb des starren Ringes drehen und bewegen. Der Durchmesser des Ringes ist nicht variabel, aber die Höhe des Ringes lässt sich stufenweise verschieben. Durch diese Verschiebung kann man die Höhe des starren Ringes an die Körpergröße des Benutzers anpassen. Die Krümmung der konkaven Bodenplattform ist nicht variabel. Dieses Konzept erlaubt es dem Benutzer die axiale Mitte des Gerätes innerhalb des Ringes zu verlassen um dadurch den Fuß auf eine gekrümmte Bodenfläche stellen zu können. Durch den gekrümmten Boden wirkt die Gravitationskraft unterstützend, um die Anstrengung einer Gehbewegung zu reduzieren. Diese Konstruktionsweise erfordert es jedoch, dass der Körperschwerpunkt die axiale Mitte des Geräts verlässt, um mithilfe der Gravitationskraft nach unten gleiten zu können. Dreht sich der Benutzer nun und möchte in eine andere Richtung weiter gehen, muss er zwingend nicht nur eine Rotationsbewegung, sondern zusätzlich auch eine laterale Bewegung ausführen. Diese laterale Bewegung wird dann durch das Auftreffen der Person bzw. deren Gurt am Ring abrupt gestoppt. Dadurch, dass sowohl die Krümmung als auch der Ringdurchmesser nicht variabel einstellbar sind, kann das System nicht auf verschiedene Körpergrößen und Körpermassen angepasst werden und funktioniert deshalb nicht optimal für verschiedene Benutzer mit unterschiedlichen Körpergrößen und Körpermassen. Weiters ist auch bei der technischen Realisierung dieses Geräts ein hoher Druck des Benutzers in die gewünschte Bewegungsrichtung aufzuwenden, da die Krümmung der Bodenplattform nicht an die Körpergröße des Benutzers angepasst werden kann. Dieser Druck ist vergleichbar mit jenem aus obiger Beschreibung (EP 2911755 B1) .

Die US 8790222 B2 offenbart ein "locomotion device" mit einem motorisierten Laufband, wobei das Laufband aus einem einzigen spiralförmig gewickelten Band besteht. Durch zwei separat steuerbare Motoren ist es möglich eine Person in zwei verschiedenen, zueinander orthogonalen Achsen auf der Plattform zu positionieren. Anstatt der Gravitationskraft nutzt dieses System die Bewegung des Bandes, um den Benutzer in einem Bereich im Zentrum der Plattform zu halten. Neben der komplexen mechanischen Konstruktionsweise zählt bei diesem Gerät die Trägheit sowie die technisch realisierbaren Latenzzeiten zwischen der Messung der Position des Benutzers und der Ausführung einer Positionierungsbewegung zu den größten Herausforderungen. Bei diesem Gerät werden dem Benutzer abrupt die "Füße unter den Beinen weggezogen", was das Gleichgewichtssystem des Benutzers sofort ausgleichen muss. Sollte das Gleichgewichtssystem des Benutzers nicht ausreichend schnell reagieren, ist auch ein Sturz des Benutzers möglich.

In der DE 10361417 B3 wird eine Vorrichtung beschrieben, welche aus einer Hohlkugel besteht, die auf Rollen gelagert ist und in der man sich bewegen kann, indem man diese Hohlkugel in Rotation versetzt. Die Rotation der Kugel wird über Sensoren erfasst und zu einem Computer weitergeleitet. Dieser Computer berechnet nun die Rotationswerte und setzt die Bewegung des Benutzers in die Bewegung einer virtuellen Figur um. Somit kann man sich durch virtuelle Räume bewegen. Diese Hohlkugel muss einen Durchmesser besitzen, welcher größer ist als die Körpergröße der das Gerät benutzenden Person. Aus diesem Grund verursacht diese Vorrichtung einen hohen Platzverbrauch. Da die Hohlkugel auch eine Trägheit besitzt, ist das abrupte Stehenbleiben in dem Gerät nur bedingt möglich und birgt Gefahr eines Sturzes des Benutzers.

Die Dokumente US 6,152,854 A sowie WO 00/77604 A2 stellen darüber hinaus den Stand der Technik zur vorliegenden Erfindung dar.

Die Erfindung ist definiert in Anspruch 1. Weitere vorteilhafte Ausführungen werden in den abhängigen Ansprüchen definiert.

Der Erfindung liegt die Aufgabe zugrunde, eine Vorrichtung bereitzustellen, welche die Nachteile von bekannten Positionierungs-, Simulations- , Bewegungsvorrichtungen überwindet und eine möglichst realitätsnahe Gehbewegung mit geringer Anstrengung für den Benutzer realisiert. Durch Ermöglichung einer möglichst natürlichen Bewegung für den Benutzer soll ein rascher Lernvorgang zur korrekten Nutzung des Locomotion Gerätes gewährleistet sein als auch die Immersion in die virtuelle Welt ohne große Störungen aufrechterhalten werden können. Zur Lösung dieser Aufgabe umfasst die Erfindung ausgehend von einer Vorrichtung der eingangs genannten Art eine Sensorvorrichtung, die eingerichtet ist, um die Orientierung des Benutzers auf der Plattform zu erfassen, und die mit der räumlichen Bewegungs-Maschine zusammenwirkt, um die Neigungsrichtung der Plattform manuell oder automatisch in Abhängigkeit von der erfassten Orientierung des Benutzers einzustellen, sodass der Benutzer trotz des Ausführens von Gehbewegungen an Ort und Stelle verbleibt, wobei die Sensorvorrichtung derart mit der räumlichen Bewegungs-Maschine zusammenwirkt, dass die Falllinie der Plattform im Wesentlichen in der Sagittalebene des Benutzers oder parallel zu dieser gehalten wird. Die Erfindung sieht vor, dass die Plattform zwischen der Plattform und dem Benutzer wirksame Mittel zur Erleichterung der kontaktbehafteten Relativbewegung des Benutzers relativ zur Plattform aufweist. Die Erleichterung der kontaktbehafteten Relativbewegung des Benutzers erfolgt hierbei insbesondere durch eine Verringerung der Reibung zwischen den Füßen oder Schuhen des Benutzers und der Plattform, sodass der Benutzer besser auf der Plattform gleitet.

Dadurch, dass eine neigbare Plattform zum Einsatz gelangt, verursacht das Eigengewicht des Benutzers auf Grund der Gravitation beim Betreten bzw. bei simulierten Gehbewegungen des Benutzers auf der relativ zur Horizontalen geneigten Plattform eine in der Plattenebene wirksame Kraftkomponente, die ein Rutschens des Benutzers auf der Plattform bewirkt oder zumindest begünstigt. Dieses Rutschen induziert eine als natürlich empfundene Gehbewegung, wobei die durch die Gehbewegung intendierte Fortbewegung und das Rutschen einander aufheben, sodass der Benutzer trotz des Ausführens von Gehbewegungen im Wesentlichen an Ort und Stelle verbleibt.

Dadurch, dass die Neigungsrichtung der Plattform in Abhängigkeit von der erfassten Orientierung des Benutzers eingestellt wird, gelingt eine automatische Anpassung der Neigung an die vom Benutzer gewünschte Fortbewegungsrichtung und/oder an die vom Benutzer gewünschte Fortbewegungsgeschwindigkeit.

Die Erfindung sieht vor, dass die Sensorvorrichtung derart mit der räumlichen Bewegungs-Maschine zusammenwirkt, dass die Falllinie der Plattform im Wesentlichen in der Sagittalebene des Benutzers oder parallel zu dieser gehalten wird. Die Sensorvorrichtung ist daher ausgebildet, um eine Sagittalebene des Benutzers zu erfassen. Die Sagittalebene des Benutzers repräsentiert hierbei die Richtung der intendierten Fortbewegung. Dadurch, dass die Falllinie der geneigten Plattform an der Sagittalebene des Benutzers ausgerichtet wird, wird sichergestellt, dass die Plattform keine Neigungskomponente aufweist, die ein unbeabsichtigtes seitliches Abdriften des Benutzers von der gewünschten Bewegungsrichtung verursacht.

Für den Fall, dass der Benutzer Gehbewegungen für eine vorwärts gerichtete Fortbewegung ausführt, ist bevorzugt vorgesehen, dass die Sensorvorrichtung derart mit der räumlichen Bewegungs-Maschine zusammenwirkt, dass die Plattform von dorsal nach ventral gesehen bergauf gerichtet wird. Dem Benutzer wird somit eine aus seiner Sicht bergauf führende Plattform präsentiert, sodass das durch die Neigung begünstigte Rutschen dem Vorwärtsbewegen entgegenwirkt.

Alternativ kann die Plattform für eine rückwärts gerichtete Fortbewegung (Rückwärtsgehen) eine entgegengesetzte Neigung oder keine Neigung annehmen.

Die Neigungsrichtung und/oder der Neigungswinkel können zusätzlich auch in Abhängigkeit von der erfassten Position des Benutzers auf der Plattform eingestellt werden, wobei dies die Möglichkeit schafft, die Neigung dahingehend anzupassen, dass der Benutzer möglichst nahe an der Plattformmitte gehalten wird. Dies bedeutet beispielsweise, dass der Neigungswinkel verringert wird, wenn der Benutzer sich in simulierter Fortbewegungsrichtung gesehen hinter der Plattformmitte befindet und dass der Neigungswinkel vergrößert wird, wenn der Benutzer sich in simulierter Fortbewegungsrichtung gesehen vor der Plattformmitte befindet.

Die Sensorvorrichtung ist in diesem Zusammenhang bevorzugt dahingehend weitergebildet, dass sie den von der Frontalebene des Benutzers gemessenen Normalabstand von der Plattformmitte erfasst und mit der räumlichen Bewegungs-Maschine zusammenwirkt, um den Neigungswinkel in Abhängigkeit vom Normalabstand einzustellen.

Die Erfassung der Position des Benutzers kann bevorzugt auch die Erfassung einer zeitlichen Änderung der Position, d.h. eine Positionsveränderung relativ zur Plattform, umfassen. In diesem Zusammenhang sieht eine bevorzugte Ausbildung der Erfindung vor, dass die Sensorvorrichtung ausgebildet ist, um eine Positionsänderung des Benutzers auf der Plattform zu erfassen, wobei die Sensorvorrichtung mit der räumlichen Bewegungs-Maschine zusammenwirkt, um den Neigungswinkel der Plattform in Abhängigkeit von der erfassten Positionsänderung des Benutzers einzustellen. Bevorzugt ist die Ausbildung hierbei so getroffen, dass der Neigungswinkel verringert wird, wenn der Benutzer sich in simulierter Fortbewegungsrichtung gesehen von der Plattformmitte nach hinten entfernt und dass der Neigungswinkel vergrößert wird, wenn der Benutzer sich in simulierter Fortbewegungsrichtung gesehen zur Plattformmitte hin bewegt. Weiters kann vorgesehen sein, dass die Neigung erhöht wird, wenn sich der Benutzer von der Plattformmitte nach vorne wegbewegt, sodass er sich wieder der Plattformmitte nähert.

Bei der Einstellung der Neigung der Plattform kann auch die Masse des Benutzers berücksichtigt werden. Zu diesem Zweck ist bevorzugt vorgesehen, dass die Plattform einen integrierten Gewichtssensor aufweist, der mit der räumlichen Bewegungs-Maschine zusammenwirkt, um den Neigungswinkel der Plattform in Abhängigkeit von dem gemessenen Gewicht des Benutzers einzustellen. So kann vorgesehen sein, dass die Plattform bei einem Benutzer mit geringerem Körpergewicht bei ansonsten gleichen Rahmenbedingungen stärker geneigt wird als bei einem Benutzer mit höherem Körpergewicht oder wenn gewünscht auch umgekehrt. Die Messung des Gewichts des Benutzers kann durch Dehnmessstreifen, kraftsensitive Wiederstände, piezoelektrische Drucksensoren, piezoresistive Drucksensoren, kapazitive Drucksensoren, induktive Drucksensoren oder andere Drucksensoren erfolgen.

Gemäß einer bevorzugten Ausbildung ist eine Steuervorrichtung vorgesehen, welcher die Messsignale der Sensorvorrichtung bzw. der einzelnen Sensoren der Sensorvorrichtung zugeführt sind und die mit der räumlichen Bewegungs-Maschine zusammenwirkt, um die Neigungsrichtung der Plattform in Abhängigkeit von der von der Sensorvorrichtung erfassten Orientierung bzw. Position bzw. Positionsänderung des Benutzers einzustellen. In diesem Fall wirkt die Sensorvorrichtung somit unter Zwischenschaltung der Steuervorrichtung mit der räumlichen Bewegungs-Maschine zusammen, wobei die Steuervorrichtung ausgebildet ist, um die Sensorsignale auszuwerten und daraus geeignete Steuersingale für die räumlichen Bewegungs-Maschine zu generieren.

Die Steuervorrichtung ist bevorzugt an eine Recheneinrichtung zur Simulation einer auf einer Anzeigeeinrichtung darstellbaren bzw. dargestellten virtuellen Umgebung angeschlossen, wobei die Recheneinrichtung ausgebildet ist, um die Darstellung der virtuellen Umgebung in Abhängigkeit von den Sensorsignalen der Sensorvorrichtung anzupassen. Die Sensorvorrichtung ist zu diesem Zweck ausgebildet, um zusätzlich zur Orientierung des Benutzers auch die Schrittgeschwindigkeit und ggf. die Schrittweite des Benutzers auf der Plattform und ggf. die Schrittbewegungsrichtung zu erfassen, um daraus z.B. die Geschwindigkeit der simulierten Fortbewegung und ggf. die Fortbewegungsrichtung zu errechnen.

Die erfindungsgemäße Vorrichtung kann vorzugsweise als Sportvorrichtung, Locomotionvorrichtung, Bewegungsvorrichtung, Virtual Reality Simulationsvorrichtung, Trainingsvorrichtung oder als Vorrichtungen zur Durchführung wissenschaftlicher Experimente an Menschen, Tieren und bewegbaren Maschinen verwendet werden.

Um die Position, Orientierung und/oder Positionsänderung des Benutzers auf der Plattform zu messen, können verschiedene Typen von Sensoren zum Einsatz gelangen. Die Sensoren könnten optisch, akustisch, kapazitiv, induktiv oder magnetisch arbeiten.

Im Falle eines oder mehrerer optischer Sensoren können Kameras eingesetzt werden, welche die Bewegungen des Benutzers (insbesondere z.B. die Bewegungen der Beine oder der Hüftregion des Benutzers) erfassen und interpretieren. Kameras eignen sich insbesondere für die Erfassung der Orientierung des Benutzers. Alternativ können die optischen Sensoren nach Art einer Computermaus funktionieren, mit welchen die Bewegung einer Oberfläche des Benutzers, wie z.B. der Unterseite der Füße, erfasst wird. Derartige Sensoren können daher in die Plattform eingebaut sein und die Füße des Benutzers von unten anstrahlen.

Im Falle von magnetisch arbeitenden Sensoren können diese beispielsweise ausgebildet sein, um die Stärke, Richtung und dgl. eines erzeugten Magnetfeldes zu messen und auf diese Art und Weise auf eine Positionierung des Benutzers im Magnetfeld ermitteln.

Die Erfassung der Position, Orientierung und/oder Positionsänderung des Benutzers auf der Plattform kann auch auf sichtbaren oder unsichtbaren Lichtstrahlen, vorzugsweise Laserstrahlen basiert, die von einer oder mehreren Sendestationen in den Raum ausgesendet werden und von Objekten, die am Benutzer direkt oder indirekt angebracht sind, erfasst werden. Als Beispiel für ein solches System kann das Lighthouse Tracking System genannt werden, das von der Fa. Valve entwickelt wurde und aktuell bei der VR Brille HTC Vive eingesetzt wird. Bei diesem System sendet eine Basisstation Laserstrahlen aus, die von Photosensoren auf dem Headset und den Controllern des Benutzers erkannt werden. Basierend auf der zeitlichen Differenz zwischen dem Auftreffen der Laserstrahlen auf den jeweiligen Sensoren kann ein Computer die exakte Position und Orientierung des Geräts errechnen. Ein solches System ist auch unter der Bezeichnung SteamVR^{®} Tracking bekannt.

Allgemein sind auch Tracking-Systeme einsetzbar, welche die Position von am Körper des Benutzers angebrachten Referenzpunkten (Trackern) im dreidimensionalen Raum messen. Als Beispiel sind sogenannte Motion Capture Suits zu nennen, bei welchen die zu trackenden Referenzpunkte in einen Anzug integriert sind. Die dreidimensionale Erfassung der Referenzpunkte erfolgt mit Hilfe geeigneter Capture Systeme, die optisch, akustisch oder magnetisch oder auf der Basis von Kamerabildern arbeiten können.

Bevorzugt kommt eine Kombination von nach unterschiedlichen Messprinzipien arbeitenden Sensoren zum Einsatz. Beispielsweise sind sogenannte Inertial Sensoren bekannt, die Accelerometern, Gyroskopen und/oder Magnetometern aufweisen.

Wenn die Vorrichtung ein Gerüst aufweist, welches den Körper des Benutzers zum Beispiel ringförmig umschließt und mit welchem der Benutzer verbunden ist, kann die Messung der Orientierung des Benutzers durch das Messen der Orientierung des Gerüstes erfolgen.

Im Rahmen der Erfindung ist die Plattform neigbar angeordnet, wozu eine entsprechende Lagerung der Platte vorgesehen ist. Die Plattform ist vorzugsweise allseitig neigbar ausgebildet. Dies kann konstruktiv auf verschiedene Art und Weise realisiert werden. Gemäß einer ersten Ausbildung kann die Plattform um ein einziges Schwenklager neigbar gelagert sein, wobei das das Schwenklager tragende Teil um eine vertikale, mittige Achse um 360° drehbar gelagert ist. Gemäß einer alternative Ausbildung kann auf die Drehbarkeit der Plattform um eine vertikale Achse verzichtet werden und die allseitige Neigbarkeit dadurch erreicht werden, dass die Plattform an verschiedenen Stellen in wählbarem Ausmaß angehoben bzw. abgesenkt werden kann, z.B. mit Hilfe eines Hexapods.

Allgemein kann die Plattform mit wenigstens zwei Freiheitsgraden ausgestattet sein. Bevorzugt weist die Plattform wenigstens drei, insbesondere sechs Freiheitsgrade auf. Es ist auch denkbar neun Freiheitsgrade vorzusehen, sodass mit der Plattform über das erfindungsgemäße Grundprinzip hinausgehende Funktionen realisiert werden können.

Die Plattform kann vollständig alleinstehend verwendet werden, sodass die Positionierung oder Positionsbeibehaltung des Benutzers alleine durch die erfindungsgemäße Neigung der Plattform bewerkstelligt werden muss. Zusätzlich können aber auch andere Methoden zur Bewegungseinschränkung, zur Positionsbeibehaltung oder zur Positionierung von Benutzern eingesetzt werden, sodass die erfindungsgemäße Neigung der Plattform in Abhängigkeit von der Orientierung bzw. Position des Benutzers nur unterstützend wirkt. Dadurch kann der für die Positionsbeibehaltung oder Positionierung erforderliche Kraftaufwand oder der vom Benutzer auf die Plattform auszuübende Aufstandsdruck verringert werden.

Bevorzugt ist die Aufstandsfläche der Plattform, auf welcher der Benutzer steht bzw. geht, eben ausgebildet. Alternativ kann die Aufstandsfläche eine konkave oder konvexe Form oder die Form einer Schale oder Wanne annehmen.

Für die Bewegung der Plattform ist erfindungsgemäß eine räumliche Bewegungs-Maschine vorgesehen. Die automatisierte Bewegung der Plattform kann zum Beispiel durch Motoren erfolgen, welche die Kraft über Linearzylinder, über Gestänge, über Seile oder Ketten oder dgl. übertragen. Alternativ kann die automatisierte Bewegung der Plattform zum Beispiel auch mittels pneumatischen oder hydraulischen Systemen erfolgen.

Bevorzugt werden Linearzylinder verwendet, welche aus einem Motor und einem Lineargetriebe bestehen. Es sind auch Kombinationen von Motoren, Schneckengetrieben und Hebelkonstruktionen möglich.

In einer möglichen Ausbildung umfasst die Plattform zwei Freiheitsgrade und umfasst ein Kreuzgelenk, welches mittig unter der beweglichen Plattform angebracht ist, wobei zwei Aktuatoren die Plattform manipulieren. Diese zwei Aktuatoren können Linearaktuatoren oder Rotationsaktuatoren sein. Die Linearaktuatoren können auch als pneumatische Hubzylinder oder als hydraulische Hubzylinder ausgebildet sein. Bei Verwendung von Linearaktuatoren kann man die Plattform hoch anbringen und die Linearaktuatoren schräg oder vertikal montieren. Die Verbindungen des beweglichen Endes der Aktuatoren mit der neigbaren Plattform als auch das statische Ende der Aktuatoren, welches mit einer statischen, nicht neigbaren Grundkonstruktion verbunden ist, sollten drei rotatorische Freiheitsgrade erlauben, um eine optimale Funktionsweise ohne Klemmen zu gewährleisten. Dies kann durch sogenannte "Fisheye Gelenke" an beiden Enden der Aktuatoren erzielt werden. Die drei Punkte an der neigbaren Plattform, welche sich durch das Kreuzgelenk und die zwei Verbindungspunkte der Aktuatoren ergeben, bilden vorzugsweise ein Dreieck, vorzugsweise ein gleichschenkeliges Dreieck, insbesondere ein gleichschenkeliges rechtwinkeliges Dreieck.

Bei einer Bauweise mit Rotationsaktuatoren kann man eine Kombination von Motoren, Schneckengetrieben und Hebelarmen verwenden. Die Schneckengetriebe können als Planargetriebe, Planetengetriebe oder Hypoidgetriebe ausgebildet sein. Dabei werden die Getriebe, an denen die Motoren montiert sind, unter der neigbaren Plattform verbaut und an der Ausgangswelle der Getriebe werden Hebelarme montiert. Diese Hebelarme werden dann wiederum über eine Stange, welche an beiden Enden durch "Fisheye Gelenke" drei rotatorische Freiheitsgrade erlaubt, mit der neigbaren Plattform verbunden. Die drei Punkte an der neigbaren Plattform, welche sich durch das Kreuzgelenk und die zwei Verbindungspunkte der Stangen an den Hebelarmen ergeben, bilden bevorzugt ein Dreieck, vorzugsweise ein gleichschenkeliges Dreieck, insbesondere ein gleichschenkeliges rechtwinkeliges Dreieck. Durch Rotation der Motoren kann man nun diese Hebelarme schwenken und dadurch die darauf angebrachte Plattform neigen.

Eine weitere Art einer Bewegungsmaschine, welche drei Freiheitsgrade erlaubt, umfasst drei Aktuatoren, mit welchen die Plattform manipuliert werden kann. Dabei können diese Aktuatoren wiederum Linearaktuatoren oder Rotationsaktuatoren sein. Durch das Ersetzen des Kreuzgelenkes durch einen dritten Aktuator ist es außerdem möglich, zusätzlich zur Neigung der Plattform diese linear zu verschieben.

Eine weitere Art einer Bewegungsmaschine, welche sechs Freiheitsgrade erlaubt, umfasst sechs Aktuatoren, mit welchen die Plattform manipuliert werden kann. Dabei können diese Aktuatoren Linearaktuatoren oder Rotationsaktuatoren sein. Diese Art von Konstruktion wird auch als "Stewart Plattform" bezeichnet.

Eine andere Art die Plattform in verschiedenen Freiheitsgraden zu manipulieren ist der Einsatz eines Roboterarms.

Die Mittel zur Erleichterung der Relativbewegung umfassen bevorzugt eine reibungsmindernde Beschichtung der Plattform oder eine reibungsmindernde Ausführung der Plattformoberfläche, sodass der (Gleit-)Reibungskoeffizient zwischen dem Benutzer und der Plattform herabgesetzt ist, und zwar vorzugsweise auf µ_{g} < 0,2, insbesondere 0,1.

Alternativ oder zusätzlich können Schuhe mit einem Sohlenmaterial verwendet werden, welches in der Materialpaarung mit dem Material der Plattformoberfläche einen geringen Reibungskoeffizienten aufweist. Das Sohlenmaterial kann hierbei auch auf einem speziellen Überschuh ausgebildet sein, welches über handelsübliche Schuhe angezogen werden kann.

Bei einer alternativen Ausführungsform umfassen die Mittel zur Erleichterung der Relativbewegung eine Mehrzahl von von der Ebene der Plattform vorstehenden Rollelementen, wie z.B. Rollen, Kugeln oder Walzen. Bei Verwendung von rotierbaren Kugeln, Walzen oder Rollen können diese in verschiedenster Geometrie auf der Plattformoberfläche verbaut sein und ermöglichen translatorische Bewegungen des Benutzers ohne dabei auf spezielles Schuhwerk angewiesen zu sein. Ein Benutzer kann dabei mit seinen eigenen Straßenschuhen oder aber auch ohne Schuhe auf der Plattformoberfläche positioniert werden. Auch kann der Benutzer dabei Bewegungen ausführen. Als Beispiel könnten sich in der Mitte der Plattformoberfläche eng anliegende rotierbare Kugeln befinden, jedoch weiter außerhalb konzentrisch angeordnete rotierbare Rollen oder Walzen, wobei die Rotationsachse tangential zu der konzentrischen Anordnung ist. Dadurch wäre es möglich ein seitliches weggleiten der Füße eines Benutzers auf den Rollen oder Walzen zu verhindern.

Alternativ können Rollelemente, wie z.B. rotierbare Kugeln, Walzen oder Rollen, an den Berührungsflächen des Benutzers mit der Plattformoberfläche angebracht sein. Als Beispiel bei Menschen sind Rollschuhe, Inline Skates und allgemein jegliches Schuhwerk zu nennen, das rotierbare Kugeln unter der Sohle aufweist, welches sich in zwei Achsen rotieren lassen. Dadurch wäre auch eine leichtgängige translatorische Positionierung des Benutzers möglich und es würde dem Benutzer erlauben andere Bewegungen als lediglich Gehbewegungen auszuführen.

Bei einer alternativen Ausführungsform umfassen die Mittel zur Erleichterung der Relativbewegung ein relativ zur Plattform bewegbares, insbesondere nicht angetriebenes, Laufband, wobei das Laufband vorzugsweise in wenigstens zwei einander kreuzende Richtungen bewegbar ist. Ein solches Laufband kann auf der Plattformebene angeordnet sein und wird durch die Gehbewegungen des Benutzers angetrieben. Der Antrieb des Laufbandes durch den Benutzer wird hierbei durch die Neigung der Plattform erleichtert. Eine besonders vorteilhafte Ausführung des Laufbandes ist ein omnidirektionales Laufband, welches eine Bewegung in zwei einander kreuzende Achsen erlaubt und somit keine Drehung des Laufbandes zur Anpassung an die Orientierung des Benutzers erfordert.

Im Rahmen der Erfindung kann die Vorrichtung gänzlich eigenständig oder alternativ in Kombination mit einem Gerüst oder Sicherungssystem angewendet werden, das den Benutzer zusätzlich hält oder sichert. Das Gerüst kann einen den Benutzer umschließenden Ring aufweisen, mit dem der Benutzer direkt, indirekt oder gar nicht verbunden ist. Ist der Benutzer gar nicht mit dem Ring verbunden, so kann dieser zum Beispiel dazu dienen, dass sich der Benutzer anhalten kann, wenn er sich unsicher fühlt.

Das Gerüst kann den Benutzer auch übergreifen, d.h. über den Kopf des Benutzers reichen und diesen von oben sichern. Das Gerüst kann sich auch hinter dem Benutzer befinden und diesen von hinten festhalten.

Der Benutzer kann alternativ auch mit einem Seilsystem verbunden werden, das ihn aus verschiedenen Richtungen halten oder sichern kann.

Der Benutzer kann mit einem System aus Federn oder Gummizügen verbunden sein, das ihn in einem gewissen Bereich halten kann.

Die erfindungsgemäße Vorrichtung kann vollkommen alleinstehend funktionieren, indem alle notwendigen Komponenten zur Bewegungserkennung, zum Processing und zur Steuerung der Plattform in einem einzigen Gerät verbaut werden.

Die Erfindung kann alternativ in Kombination mit Computern, Telefonen, Rechenmaschinen oder ähnlichen Maschinen funktionieren, die einen Teil der Aufgaben übernehmen. Einzelne Aufgaben - zum Beispiel auch das Bewegungstracking - können an externe Geräte ausgelagert werden.

Beim Einsatz im Virtual Reality- oder Simulationsbereich könnte die Plattform anwendungsabhängig gesteuert werden. So wäre es zum Beispiel denkbar, dass die Anwendung Einfluss auf die Neigung der Plattform hat, um beispielsweise die Anstrengung zu regulieren, was beispielsweise im Sportbereich sinnvoll ist. Ebenso wäre es denkbar, dass die Plattform geschwenkt wird, um haptisches Feedback auf den Benutzer zu übertragen.

Die Erfindung wird nachfolgend anhand von in der Zeichnung dargestellten Ausführungsbeispielen näher erläutert. In dieser zeigen Fig. 1 eine erste Ausbildung der erfindungsgemäßen Vorrichtung, Fig. 2 eine zweite Ausbildung der erfindungsgemäßen Vorrichtung, Fig. 3 eine dritte Ausbildung der erfindungsgemäßen Vorrichtung, Fig. 4 eine vierte Ausbildung der erfindungsgemäßen Vorrichtung und Fig. 5 eine fünfte Ausbildung der erfindungsgemäßen Vorrichtung.

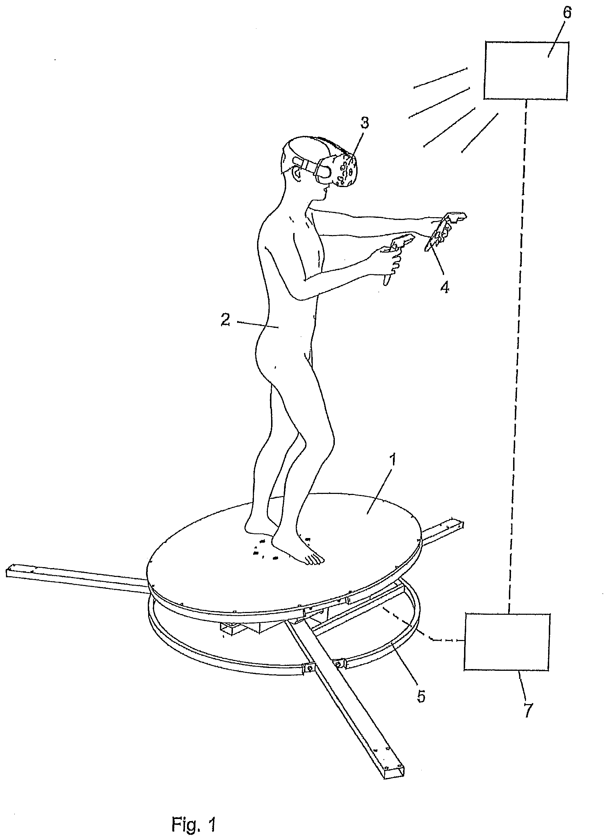

In Fig. 1 ist eine neigbare Plattform mit 1 bezeichnet, auf welcher ein Benutzer 2 Gehbewegungen ausführt. Der Benutzer 2 trägt auf seinem Kopf ein visuelles Ausgabegerät 3 ("head mounted display"), wie z.B. eine VR-Brille, und hält in jeder Hand einen Controller 4. Über das Ausgabegerät 3 wird dem Benutzer 2 eine virtuelle Umgebung dargestellt, in der er sich virtuell bewegen kann. Zu diesem Zweck führt der Benutzer 2 auf der Plattform 1 Gehbewegungen aus ohne sich jedoch tatsächlich fortzubewegen. Dies wird dadurch erreicht, dass die Plattform 1 in Richtung der virtuellen Fortbewegung gesehen eine bergauf führende, geneigte Ebene ausbildet, wobei der Benutzer 2 durch geeignete Mittel, wie z.B. durch Verringerung des Reibungskoeffizienten zwischen den Füßen bzw. Schuhen und der Oberfläche der Plattform 1 auf der Plattform 1 rutscht. Die Plattform 1 ist relativ zu einem Grundkörper 5 neigbar gehalten, wobei sowohl die Neigungsrichtung als auch der Neigungswinkel veränderbar sind.

Eine schematisch dargestellte Sensorvorrichtung 6 ist angeordnet, um die Position und die Orientierung des Benutzers 2 im dreidimensionalen Raum zu erfassen. Die Signale der Sensorvorrichtung 6 sind einer Steuervorrichtung 7 zugeführt, welche einer in Fig. 1 nicht dargestellten räumlichen Bewegungsmaschine Steuersingale zuführt, um den Neigungswinkel und die Neigungsrichtung der Plattform anzupassen. Insbesondere ist in einer bevorzugten Ausführungsform vorgesehen, dass die Neigungsrichtung der Plattform 1 so eingestellt wird, dass die Falllinie der geneigten Plattformebene in der Sagittalebene oder parallel zu dieser angeordnet ist.

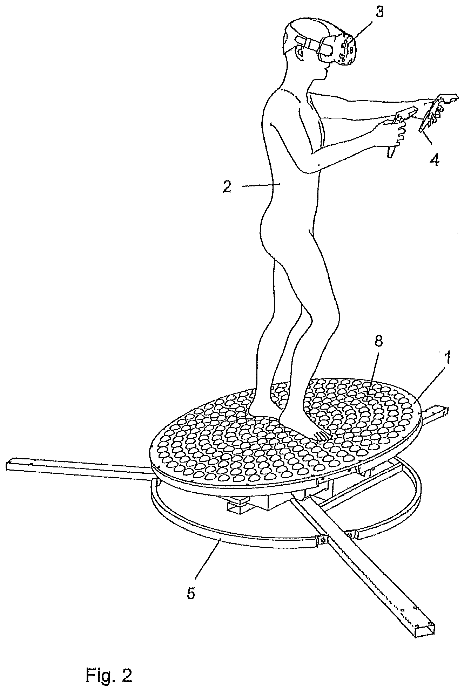

In der abgewandelten Ausbildung gemäß Fig. 2 ist die Oberfläche der Plattform 1 als Kugeltisch mit einer Vielzahl von drehbar gelagerten Kugeln 8 ausgebildet, um ein Gleiten des Benutzers bei den Gehbewegungen auf der Plattform 1 zu fördern.

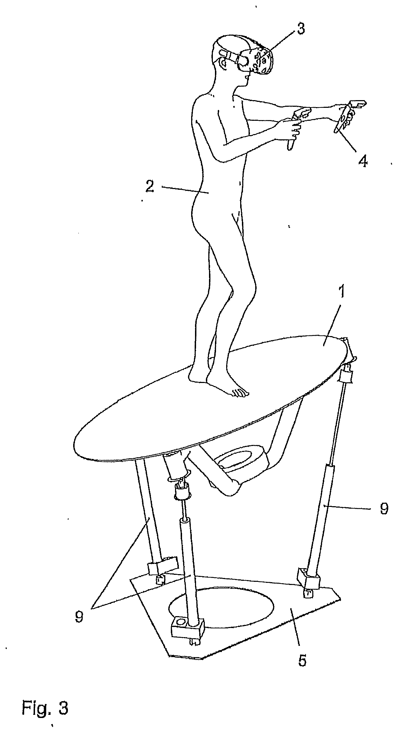

In Fig. 3 ist eine Ausführung der räumlichen Bewegungsmaschine gezeigt. Die Bewegungsmaschine umfasst drei Linearzylinder, die z.B. hydraulisch betätigbar sind und einerseits am Rand der Plattform 1 und andererseits am Grundkörper 5 angreifen. Durch geeignetes Ausfahren der einzelnen Linearzylinder kann jede beliebige Neigungsrichtung und jeder beliebige Neigungswinkel eingestellt werden.

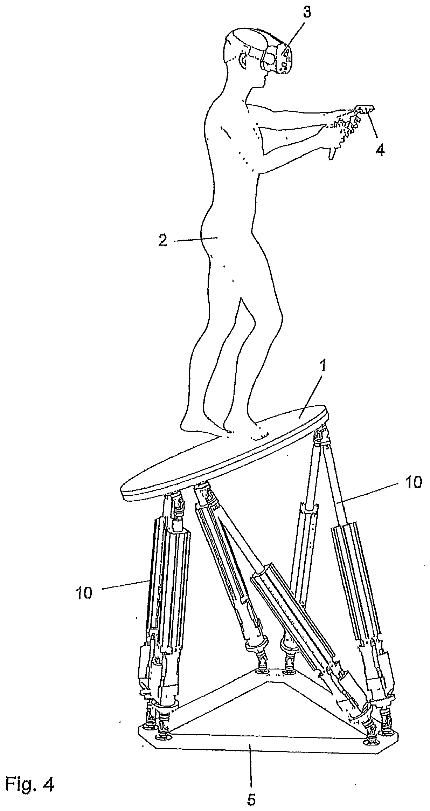

In Fig. 4 ist eine alternative Ausbildung der räumlichen Bewegungsmaschine dargestellt. Die räumliche Bewegungsmaschine ist hier als Hexapod ausgebildet und umfasst insgesamt sechs Linearzylinder 10.

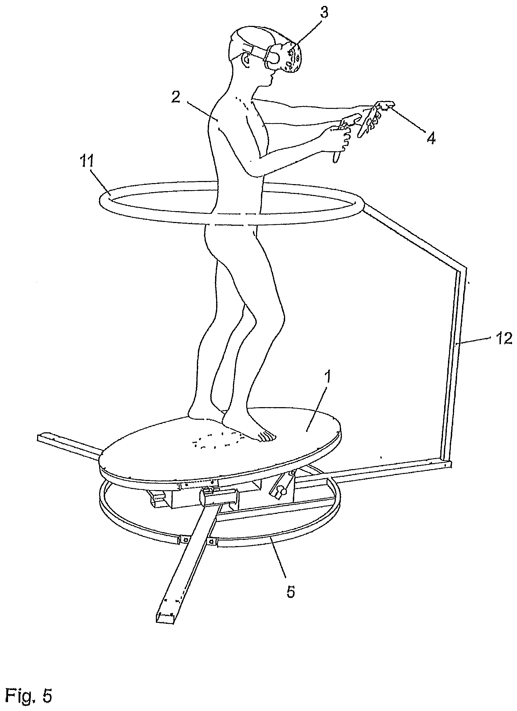

Bei der Ausbildung gemäß Fig. 5 umfasst die Vorrichtung einen den Benutzer 2 im Hüftbereich umschließenden Ring 11, der über ein Gestell 12 am Grundkörper 5 befestigt ist. Der Ring 11 dient als Sicherheitseinrichtung, um den Benutzer 2 auf der Plattform 1 zu halten.

Durch die Erfindung wird eine Vorrichtung geschaffen, mit der die Anstrengung einer Gehbewegung auf der Plattform reduziert wird, indem die Normalkraft an der Oberfläche der Plattform neigungsabhängig verringert und eine zusätzliche Kraftkomponente erzeugt wird, die in der Plattenebene wirkt.

Wird die Erfindung in Kombination mit einem anderen System verwendet, wie beispielsweise in Kombination mit einem der beschriebenen Systeme, bei welchem der Benutzer Druck nach vorne aufbauen muss, um die Reibungskraft der Füße auf der Plattform zu überwinden, so kann die Erfindung dazu beitragen, den erforderlichen Druck erheblich zu reduzieren und dadurch die Bewegung weniger anstrengend und für den Benutzer angenehmer zu gestalten.

Durch die Erfassung der Position, Orientierung und/oder Positionsänderung des Benutzers, kann die Plattform derart geneigt werden, dass sich der Benutzer dem vertikalen Achsenmittelpunkt der Plattform nähert. Es wird eine Art Potenzialminimum an der vertikalen Achse der Plattform erzeugt. Diese translatorische Bewegung des Benutzers in Richtung der zur Plattformoberfläche orthogonalen, in der Plattformmitte befindenden Achse könnte durch Anpassung der Neigung unterschiedliche translatorische Geschwindigkeiten aufweisen. Auch kann die Beschleunigung dieser translatorischen Bewegung durch die Plattformneigung gesteuert werden. Durch das Steuern der Beschleunigung kann man die Kräfte, welche auf den Benutzer wirken, beeinflussen. Diese Kräfte können derart reduziert werden, dass die Kräfte auf den Vestibularsinn des Benutzers minimiert werden. Dies kann dazu führen, dass die sogenannte Motion Sickness reduziert wird und auch die Balance des Benutzers aufrecht erhalten wird oder das Gleichgewichthalten des Benutzers erleichtert wird.

In einer bevorzugten Ausführungsform kann der Neigungswinkel der Plattform relativ zur Horizontalen weniger als 10 Grad betragen, um einen menschlichen Benutzer mit einer durchschnittlichen Körpergewicht von 80 kg zu positionieren.

## Patentansprüche

1. Vorrichtung für die simulierte Fortbewegung eines Benutzers insbesondere in einer virtuellen Umgebung, umfassend eine vom Benutzer (2) begehbare Plattform (1), wobei die Plattform (1) neigbar angeordnet ist und mit einer räumlichen Bewegungs-Maschine zusammenwirkt, um die Neigungsrichtung und den Neigungswinkel der Plattform (1) zu verändern, wobei die Vorrichtung eine Sensorvorrichtung (6) umfasst, die eingerichtet ist, um die Orientierung des Benutzers (2) auf der Plattform (1) zu erfassen,
die Vorrichtung **dadurch gekennzeichnet, dass** die Sensorvorrichtung ferner eingerichtet ist, mit der räumlichen Bewegungs-Maschine zusammenzuwirken, um die Neigungsrichtung der Plattform (1) in Abhängigkeit von der erfassten Orientierung des Benutzers (2) einzustellen, und wobei die Sensorvorrichtung (6) derart mit der räumlichen Bewegungs-Maschine zusammenwirkt, dass die Falllinie der Plattform (1) im Wesentlichen in der Sagittalebene des Benutzers (2) oder parallel zu dieser gehalten wird, wobei
die Plattform (1) zwischen der Plattform (1) und dem Benutzer (2) wirksame Mittel zur Erleichterung der kontaktbehafteten Relativbewegung des Benutzers (2) relativ zur Plattform (1) aufweist.

2. Vorrichtung nach Anspruch 1, **dadurch gekennzeichnet, dass** die Sensorvorrichtung (6) derart mit der räumlichen Bewegungs-Maschine zusammenwirkt, dass die Plattform (1) von dorsal nach ventral gesehen bergauf gerichtet wird.

3. Vorrichtung nach Anspruch 1 oder 2, **dadurch gekennzeichnet, dass** die Sensorvorrichtung (6) ausgebildet ist, um den von der Frontalebene des Benutzers (2) gemessenen Normalabstand von der Plattformmitte zu erfassen und dass die Sensorvorrichtung (6) mit der räumlichen Bewegungs-Maschine zusammenwirkt, um den Neigungswinkel in Abhängigkeit vom Normalabstand einzustellen.

4. Vorrichtung nach Ansprüche 1, 2 oder 3, **dadurch gekennzeichnet, dass** die Sensorvorrichtung (6) eingerichtet ist, um zusätzlich die Position des Benutzers (2) auf der Plattform (1) zu erfassen und dass die von der Sensorvorrichtung (6) erfasste Position eine Positionsänderung des Benutzers (2) umfasst.

5. Vorrichtung nach einem der Ansprüche 1 bis 4, **dadurch gekennzeichnet, dass** die Mittel zur Erleichterung der Relativbewegung eine reibungsmindernde Oberfläche der Plattform (1) umfassen.

6. Vorrichtung nach einem der Ansprüche 1 bis 4, **dadurch gekennzeichnet, dass** die Mittel zur Erleichterung der Relativbewegung eine Mehrzahl von von der Ebene der Plattform (1) vorstehenden Rollelementen, wie z.B. Rollen, Kugeln (8) oder Walzen, umfassen.

7. Vorrichtung nach einem der Ansprüche 1 bis 4, **dadurch gekennzeichnet, dass** die Mittel zur Erleichterung der Relativbewegung ein relativ zur Plattform (1) bewegbares, insbesondere nicht angetriebenes, Laufband umfassen, wobei das Laufband vorzugsweise in wenigstens zwei einander kreuzende Richtungen bewegbar ist.

## Claims

1. A device for simulated locomotion of a user, in particular in a virtual environment, comprising a platform (1) walkable by the user (2), said platform (1) being tiltably arranged and cooperating with a spatial motion machine to change the tilt direction and the tilt angle of the platform (1), said device comprising a sensor device (6) arranged to detect the orientation of the user (2) on the platform (1), said device being **characterized in that** the sensor device is further arranged to cooperate with the spatial motion machine to adjust the tilt direction of the platform (1) depending on the detected orientation of the user (2), and wherein the sensor device (6) cooperates with the spatial motion machine in such a manner that the fall line of the platform (1) is maintained substantially in or parallel to the sagittal plane of the user (2), the platform (1) having means effective between the platform (1) and the user (2) for facilitating the contacting relative movement of the user (2) relative to the platform (1) .

2. Device according to claim 1, **characterized in that** the sensor device (6) cooperates with the spatial motion machine in such a way that the platform (1) is directed uphill as seen from dorsal to ventral.

3. Device according to claim 1 or 2, **characterized in that** the sensor device (6) is adapted to sense the normal distance from the center of the platform measured from the frontal plane of the user (2) and that the sensor device (6) cooperates with the spatial motion machine to adjust the tilt angle as a function of the normal distance.

4. Device according to claim 1, 2 or 3, **characterized in that** the sensor device (6) is arranged to additionally detect the position of the user (2) on the platform (1) and the position detected by the sensor device (6) comprises a change in position of the user (2).

5. Device according to any one of claims 1 to 4, **characterized in that** the means for facilitating relative movement comprise a friction-reducing surface of the platform (1).

6. Device according to any one of claims 1 to 4, **characterized in that** the means for facilitating relative movement comprise a plurality of rolling elements projecting from the plane of the platform (1), such as rollers, balls (8) or rolls.

7. Device according to any one of claims 1 to 4, **characterized in that** the means for facilitating relative movement comprise a treadmill movable, in particular not driven, relative to the platform (1), the treadmill preferably being movable in at least two mutually crossing directions.

## Revendications

1. Dispositif de simulation de déplacement d'un utilisateur, notamment dans un environnement virtuel, comprenant une plate-forme (1) sur laquelle l'utilisateur (2) peut marcher, dans lequel la plate-forme (1) est agencée de manière à pouvoir basculer, et interagit avec une machine de mouvement spatial pour changer la direction d'inclinaison et l'angle d'inclinaison de la plate-forme (1), le dispositif comprenant un dispositif capteur (6) qui est agencé pour détecter l'orientation de l'utilisateur (2) sur la plate-forme (1), le dispositif étant **caractérisé en ce que** le dispositif capteur est en outre configuré pour coopérer avec la machine de mouvement spatial afin d'ajuster la direction d'inclinaison de la plate-forme (1) en fonction de l'orientation détectée de l'utilisateur (2), et dans lequel le dispositif capteur (6) interagit avec la machine de mouvement spatial de telle sorte que la ligne de plus grande pente de la plate-forme (1) soit maintenue essentiellement dans le plan sagittal de l'utilisateur (2) ou parallèlement à celui-ci, la plate-forme (1) comprenant des moyens actifs entre la plate-forme (1) et l'utilisateur (2) pour faciliter le mouvement relatif par contact de l'utilisateur (2) par rapport à la plate-forme (1).

2. Dispositif selon la revendication 1, **caractérisé en ce que** le dispositif capteur (6) interagit avec la machine de mouvement spatial de telle sorte que la plate-forme (1) soit dirigée vers le haut, vue de dorsal à ventral.

3. Dispositif selon la revendication 1 ou 2, **caractérisé en ce que** le dispositif capteur (6) est adapté pour détecter la distance normale au centre de la plate-forme, mesurée à partir du plan frontal de l'utilisateur (2), et **en ce que** le dispositif capteur (6) interagit avec la machine de mouvement spatial pour ajuster l'angle d'inclinaison en fonction de la distance normale.

4. Dispositif selon les revendications 1, 2 ou 3, **caractérisé en ce que** le dispositif capteur (6) est agencé pour détecter en outre la position de l'utilisateur (2) sur la plate-forme (1) et **en ce que** la position détectée par le dispositif capteur (6) comprend un changement de position de l'utilisateur (2).

5. Dispositif selon l'une des revendications 1 bis 4, **caractérisé en ce que** les moyens pour faciliter le mouvement relatif comprennent une surface de réduction de frottement de la plate-forme (1).

6. Dispositif selon l'une des revendications 1 bis 4, **caractérisé en ce que** les moyens pour faciliter le mouvement relatif comprennent une pluralité d'éléments roulants dépassant du plan de la plate-forme (1), tels que par ex. des rouleaux, des boules (8) ou des cylindres.

7. Dispositif selon l'une des revendications 1 bis 4, **caractérisé en ce que** les moyens pour faciliter le mouvement relatif comprennent un tapis mobile par rapport à la plate-forme (1), notamment non entraîné, le tapis mobile étant de préférence déplaçable selon au moins deux directions qui se croisent.
